# EUROPÄISCHE PATENTSCHRIFT

(11) **EP 2 431 630 B1**
(45) Veröffentlichungstag und Bekanntmachung des Hinweises auf die Patenterteilung: **29.07.2015**
(21) Anmeldenummer: 11006784.0
(22) Anmeldetag: 19.08.2011
(51) Int. Cl.: F16F 1/393, F16C 17/00, F16C 11/06

(54) **Kugelgelenk**
Ball joint
Articulation à billes

(30) Priorität: 17.09.2010 DE 102010045677
(43) Veröffentlichungstag der Anmeldung: 21.03.2012
(73) Patentinhaber: Jörn GmbH, 71336 Waiblingen (DE)
(72) Erfinder: Mursinsky, Jörg, 71522 Backnang (DE); Reinke, Kai, 71686 Remseck (DE)
(74) Vertreter: Liebl, Thomas

(56) Entgegenhaltungen:
- GB-A- 805 116
- US-A- 2 424 431
- US-A- 2 855 232
- US-A- 3 094 376
- US-A- 3 722 931

## Beschreibung

Die Erfindung betrifft ein Kugelgelenk nach dem Oberbegriff des Anspruchs 1.

Ein bekanntes gattungsgemäßes Kugelgelenk (US 3 094 376 A) besteht aus einem Kugelzapfen als erstem Lagerteil und einem Gehäuse als zweitem Lagerteil. Der Kugelzapfen besteht aus einem Kugelteil, an den sich ein Zapfenteil anschließt. Der Kugelzapfen ragt mit seinem Zapfenteil zumindest teilweise aus einem Durchbruch im Gehäuse heraus. Das Kugelteil ist in einer entsprechenden konkaven Kugelkalotte im Gehäuse gelagert dergestalt, dass der Kugelzapfen um seine Zapfenachse drehbar sowie im Bereich des Durchbruchs für kardanische Auslenkungen verschwenkbar ist. Das Kugelteil des Kugelzapfens besteht aus einem zumindest halbkugelförmigen Kugelabschnitt, der in einer zugeordneten, den Durchbruch im Gehäuse gegenüberliegenden konkaven Kugelkalotte des Gehäuses an einer Gleitschicht aus einer übereinanderliegenden Gleitschale und Elastomerschale gleitbar gelagert ist. Weiter schließt sich am Kugelabschnitt das Zapfenteil an, welches aus einem um die Zapfenachse rotationssymmetrischen Gleitkragen mit einem aus dem Durchbruch geführten Anschlusszapfen besteht. Der Gleitkragen ist im Gehäuse über eine Kombination aus übereinanderliegendem Gleitring und Elastomerring in Richtung der Kugelkalotte vorgespannt gleitbar gelagert. Mit dieser Anordnung ist eine rückstellkraftfreie Verdrehung des Kugelzapfens um die Zapfenachse über den vollen Winkelbereich möglich. Es fehlt jedoch eine Rückstellkraft bzw. ein elastischer Widerstand bei einer kardanischen Auslenkung und Verschwenkung des Zapfenteils im Durchbruch in eine definierte Ausgangsstellung.

Zudem ist ein Gelenk mit einem Zapfenteil bekannt (US 2 855 232 A) mit einem balligen Innenteil, welches mit einem umlaufenden Bund verdrehbar in umgebende Elastomerelemente ragt. Bei kardanischen Auslenkungen werden die Elastomerelemente verformt und üben einen elastischen Widerstand und eine Rückstellkraft aus. Das Innenteil gleitet bei kardanischen Auslenkungen hier nicht in einer Kalotte. Die Anbindung des Innenteils über einen Bund ist für die Kraftübertragung, insbesondere eine hohe Kraftübertragung ungünstig.

Aufgabe der Erfindung ist es ein gattungsgemäßes Kugelgelenk so weiterzubilden, dass bei einem gewichtsgünstigen Aufbau eine gute und hohe Kraftübertragung bei einer kardanischen Auslenkung mit einem elastischen Widerstand und einer Rückstellkraft möglich ist.

Diese Aufgabe wird dadurch gelöst, dass der Gleitkragen zylindrisch mit einem im Vergleich zum anschließenden Kugelabschnittdurchmesser kleineren Durchmesser, gegebenenfalls mit einem verrundeten Übergang ausgebildet ist. Der Gleitring ist dabei im Querschnitt etwa dreieckförmig ausgeführt und liegt sowohl am Umfang des Gleitkragens als auch seitlich am Kugelabschnitt an. Mit einer schräg angestellten, gegebenenfalls noch konvex gewölbten Umfangsfläche weist er auf eine entsprechend angestellte Innenringkontur des Gehäuses hin, wobei dazwischen der vorgespannte Elastomerring mit etwa gleicher Dicke angeordnet ist.

Vorteilhaft wird das Gehäuse gemäß Anspruch 2 aus zwei Gehäuseteilen gefertigt, wodurch sowohl eine einfache Montage mit einer einfachen Möglichkeit der Vorspannung des Elastomerrings gegeben ist. Die Teilungsebene der beiden Gehäuseteile liegt bevorzugt quer zur Zapfenachse im Bereich zwischen der Kugelkalotte und dem Gleitkragen. Die Gehäuseteile sind miteinander dicht zu verbinden, damit in den Innenbereich des Kugelgelenks keine Verschmutzung eindringen kann, wobei insbesondere für die Verformung des Elastomerrings Freiräume im Innenbereich vorzusehen sind. Die Verbindung der Gehäuseteile kann durch allgemein bekannte Maßnahmen, insbesondere durch Pressen, Schrauben, Umbördeln, Verstemmen oder Kleben, erfolgen.

Nach Anspruch 3 soll der Durchbruch am Gehäuse entsprechend der Schwenkauslenkung des Anschlusszapfens kegelstumpfförmig ausgebildet werden, so dass hier in den entsprechenden Raumrichtungen gleiche kardanische Auslenkwinkel möglich sind. Grundsätzlich ist hier jedoch auch eine andere Durchbruchform möglich, die in unterschiedlichen Raumrichtungen unterschiedliche kardanische Auslenkwinkel ermöglicht. Am Durchbruchrand soll zudem mit einem Elastomermaterial ein Endanschlag für den Anschlusszapfen geschaffen werden, der damit die kardanische Auslenkung begrenzt und gegebenenfalls das Kugelgelenk vor Überlastung des Elastomerrings schützt. Die Härte des Endanschlags kann dabei gegebenenfalls in unterschiedlichen Auslenkrichtungen durch unterschiedliche Elastomermaterialien und/oder Materialdicken variiert und den konkreten Gegebenheiten angepasst werden.

Nach Anspruch 4 ist die Gleitschicht jeweils mit einer ersten Lage als Elastomerschale und einer zweiten Lage als Gleitschale, welche untereinander verbunden sind, aufgebaut. Bevorzugt wird die so aufgebaute Gleitschicht mit der Elastomerschale an der Kugelkalotte fest angehaftet, wodurch dann der Kugelabschnitt des Kugelzapfens mit einer glatten Außenfläche an der Gleitschicht gleitbar gelagert ist.

Alternativ kann auch die Gleitschicht mit entsprechenden umgekehrten Aufbau am Kugelabschnitt angebracht sein, wobei dann dieser mit der Gleitschale in einer glatten Fläche der Kugelkalotte gleitbar gelagert ist.

Im Bereich des Gleitkragens ist nach Anspruch 5 die Innenkontur des Gehäuses bevorzugt konisch und/oder in konkaver Kugelkalottenform gegenüber der Zapfenachse angestellt, um die erforderliche Vorspannung und Abstützung der Kombination aus Gleitring und Elastomerring in Richtung der Kugelkalotte zu gewährleisten.

Auch bezüglich der Anordnung des Elastomerrings und des Gleitrings ergeben sich gemäß Anspruch 6 zwei alternative Möglichkeiten. Bevorzugt ist die Kombination, bei der der Elastomerring mit darüberliegenden Gleitring mit der Gehäuseinnenwand fest verbunden ist, wobei dann der Gleitkragen mit einer glatten Oberfläche gleitbar gelagert ist. Alternativ kann jedoch die Kombination in umgekehrter Anordnung aus Elastomerring und darüberliegendem Gleitring auch mit dem Gleitkragen fest verbunden werden, wobei dann dieser mit dem Gleitring an einer entsprechend zugeordneten glatten rotationssymmetrischen Gehäuseinnenwandfläche gleitbar gelagert ist.

Am Gleitring ergeben sich zum Durchbruch hin offene Gleitflächenspalte, die nach Anspruch 7 mit Dichtlippen und/oder überzuziehender Dichtkappen zum Schutz des Lagers abgedichtet werden, wobei sich für die Anordnung solcher Dichtmittel unterschiedliche Möglichkeiten anbieten:
Gemäß Anspruch 8 kann eine umlaufende Dichtlippe am Gleitring und/oder am Elastomerring und/oder im Bereich des Durchbruchrands angebracht werden, die am Gleitkragenende bzw. am Anschlusszapfen anliegt.

Als Material für den Gleitring und/oder die Gleitschale kann nach Anspruch 9 ein gleitfähiger Kunststoff oder Metall- oder Keramikmaterial mit einer festhaftenden Gleitschicht verwendet werden.

Anhand einer Zeichnung wird die Erfindung näher erläutert.

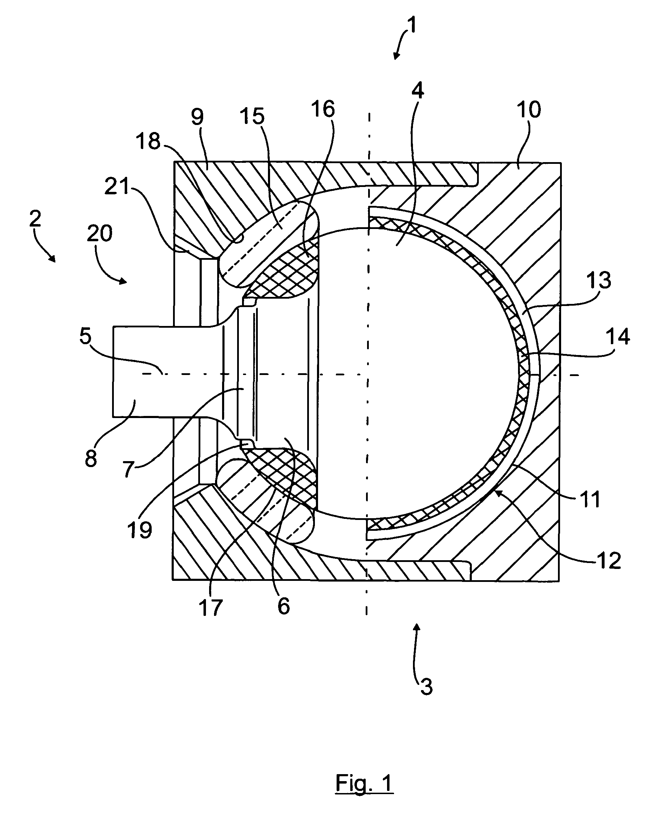

Die einzige Figur zeigt einen Längsschnitt durch ein Kugelgelenk 1 mit einem Kugelzapfen 2 als erstem Lagerteil und einem Gehäuse 3 als zweitem Lagerteil.

Der Kugelzapfen besteht aus einem Kugelteil 4 mit einer etwas mehr als halbkugelförmigen Kugelabschnittform, an die sich ein im Durchmesser kleinerer, um eine Zapfenachse 5 zylindrischer Gleitkragen 6 anschließt, welcher über einen weiter im Durchmesser reduzierten Dichtbund 7 in einen Anschlusszapfen 8 übergeht.

Das Gehäuse 3 ist zweiteilig aus einem Gehäuseoberteil 9 und einem Gehäuseunterteil 10 zusammengesetzt, wobei die Gehäuseränder an der Verbindungsstelle überlappen und dicht verklebt sind.

Das Kugelteil 4 liegt in einer formentsprechenden konkaven Kugelkalotte 11 des Gehäuseunterteils 10 unter Zwischenschaltung einer Gleitschicht 12 ein.

Die Gleitschicht 12 ist zweilagig aufgebaut und besteht aus einer mit der Kugelkalotte 11 fest verbundenen Elastomerschale 13, welche beispielsweise durch eine aufvulkanisierte Gummischicht gebildet sein kann, und einer darüberliegenden und ebenfalls fest angehafteten Gleitschale 14, beispielsweise aus einem gleitfähigen Kunststoff. Damit ist das Kugelteil 4 in der Kugelkalotte 11 verdrehbar und verschwenkbar gehalten.

Der Gleitkragen 6 ist im Gehäuseoberteil 9 durch eine Kombination aus einem vorgespannten Elastomerring 15 und einem darüber angeordneten und am Gleitkragen 6 anliegenden Gleitring 16 in Richtung auf die Kugelkalotte 11 beziehungsweise zur Lagermitte hin abgestützt und gleitbar gelagert.

Der Gleitring 16 hat dabei im Querschnitt eine etwa dreieckförmige Ausbildung und liegt sowohl am Umfang des Gleitkragens 6, als auch seitlich am Kugelabschnitt des Kugelteils 4 an. Mit einer schräg angestellten und konvex gewölbten Umfangsfläche 17 ist der Gleitring 16 auf eine entsprechend konkav kugelabschnittförmige Innenringkontur 18 des Gehäuseoberteils 9 hin gerichtet. Zwischen der Umfangsfläche 17 und der Innenringkontur 18 liegt der vorgespannte Elastomerring 15, der einerseits mit der Innenringkontur 18 und andererseits mit der Umfangsfläche 17 fest verbunden ist.

Am Gleitring 16 ist im Bereich des Dichtbundes 17 eine umlaufende elastische Dichtlippe 19 angehaftet.

Der Anschlusszapfen 8 ragt durch einen kegelstumpfförmigen Durchbruch 20 aus dem Gehäuseoberteil 9 heraus, wobei der Durchbruchrand die kardanische Schwenkauslenkung des Anschlusszapfens 8 begrenzt. Dazu ist am Durchbruchrand umlaufend ein Endanschlag 21 aus Elastomermaterial angebracht.

Das dargestellte Kugelgelenk 1 hat folgende Funktion: Drehungen des Kugelzapfens 2 um die Zapfenachse 5 sind über große Winkelbereiche, auch mit einer Durchdrehfunktion, ohne Rückstellkräfte möglich. Dabei können hohe Kräfte in Richtung der Kugelkalotte axial und radial aufgenommen werden. Weiter ist eine axiale Auslenkung des Anschlusszapfens 8 im Rahmen des Durchbruchs 20 durch Verformung des Elastomerrings 15 mit einer elastischen Rückstellkraft in die mittlere Ausgangslage möglich.

## Patentansprüche

1. Kugelgelenk (1) mit einem Kugelzapfen (2) als erstem Lagerteil, der aus einem Kugelteil (4) und einem Zapfenteil besteht, und mit einem Gehäuse (3) als zweitem Lagerteil, in dem der Kugelzapfen (2) gelagert ist dergestalt, dass er mit seinem Zapfenteil zumindest teilweise aus einem Durchbruch (20) im Gehäuse (3) herausragt und dabei um die Zapfenachse (5) verdrehbar sowie im Bereich des Durchbruchs (20) verschwenkbar ist, wobei das Kugelteil (4) des Kugelzapfens (2) aus einem zumindest halbkugelförmigen Kugelabschnitt besteht, der in einer zugeordneten, dem Durchbruch (20) gegenüberliegenden, konkaven Kugelkalotte (11) des Gehäuses (3) an einer Gleitschicht (12) aus einer übereinanderliegenden Gleitschale (14) und Elastomerschale (13) gleitbar gelagert ist, und wobei sich am Kugelabschnitt (4) das Zapfenteil anschließt, welches aus einem um die Zapfenachse (5) rotationssymmetrischen Gleitkragen (6) mit einem aus dem Durchbruch (20) geführten Anschlusszapfen (8) besteht, wobei der Gleitkragen (6) im Gehäuse (3) über eine Kombination aus übereinanderliegendem Gleitring (16) und Elastomerring (15) in Richtung der Kugelkalotte (11) vorgespannt gleitbar gelagert ist, so dass eine rückstellkraftfreie Verdrehung des Kugelzapfens (2) um die Zapfenachse (5) über den vollen Winkelbereichund eine kardanische Auslenkung möglich sind, **dadurch gekennzeichnet, dass** der Gleitkragen (6) zylindrisch mit einem im Vergleich zum anschließenden Kugelabschnittdurchmesser kleineren Durchmesser, gegebenenfalls mit einem verrundeten Übergang, ausgebildet ist, und dass der Gleitring (16) am Umfang des Gleitkragens (6) und seitlich am Kugelabschnitt (4) anliegt und mit einer schräg angestellten, gegebenenfalls noch konvex gewölbten Umfangsfläche (17) auf eine entsprechend angestellte Innenringkontur (18) des Gehäuses hinweist und dazwischen der vorgespannte Elastomerring (15) mit etwa gleicher Dicke angeordnet ist, sodass eine kardanische Auslenkung mit elastischem Widerstand möglich ist.

2. Kugelgelenk nach Anspruch 1, **dadurch gekennzeichnet, dass** das Gehäuse (3) aus zwei Gehäuseteilen (9, 10) besteht, wobei die Teilungsebene bevorzugt quer zur Zapfenachse (5) und im Bereich zwischen der Kugelkalotte (12) und dem Gleitkragen (6) liegt, und dass die Gehäuseteile (9, 10) im montierten Zustand unter Vorspannung dicht, insbesondere durch Pressen und/oder Schrauben und/oder Umbördeln und/oder Verstemmen und/oder Kleben, miteinander verbunden sind.

3. Kugelgelenk nach Anspruch 1 oder 2, **dadurch gekennzeichnet, dass** der Durchbruch (20) am Gehäuse (3) entsprechend der Schwenkauslenkung des Anschlusszapfens (8) kegelstumpfförmig ausgebildet ist, und dass der Durchbruchrand mit einem Endanschlag (21) aus Elastomermaterial für den Anschlusszapfen (8) versehen ist.

4. Kugelgelenk nach einem der Ansprüche 1 bis 3, **dadurch gekennzeichnet, dass** die Gleitschicht (12) mit einer ersten Lage als Elastomerschale (13) und einer zweiten Lage als Gleitschale (14) untereinander und mit der Kugelkalotte (11) fest verbunden sind und der Kugelabschnitt (4) mit einer glatten Außenfläche gleitbar gelagert ist.

5. Kugelgelenk nach einem der Ansprüche 1 bis 4, **dadurch gekennzeichnet, dass** die Innenkontur (18) des Gehäuses (3) im Bereich des Gleitkragens (6) konisch und/oder vorzugsweise in konkaver Kugelkalottenform angestellt ist und hier die Kombination aus Gleitring (16) und Elastomerring (15) vorgespannt angeordnet ist.

6. Kugelgelenk nach einem der Ansprüche 1 bis 5, **dadurch gekennzeichnet, dass** die Kombination aus dem Elastomerring (15) und dem darüberliegenden Gleitring (16) untereinander und mit der Gehäuseinnenwand (18) fest verbunden sind und der Gleitkragen (6) mit einer glatten Oberfläche gleitbar gelagert ist, oder dass alternativ eine Kombination aus unterem Elastomerring und darüberliegendem Gleitring mit dem Gleitkragen fest verbunden ist und dieser mit dem Gleitring an einer zugeordneten glatten, rotationssymmetrischen Gehäuseinnenwand gleitbar gelagert ist.

7. Kugelgelenk nach einem der Ansprüche 1 bis 6, **dadurch gekennzeichnet, dass** zum Durchbruch (20) hin offene Gleitflächenspalte des Kugelzapfens (2) mittels Dichtlippen (19) und/oder überzuziehender Dichtkappen abgedichtet sind.

8. Kugelgelenk nach Anspruch 7, **dadurch gekennzeichnet, dass** wenigstens eine umlaufende Dichtlippe (19) am Gleitring (16) und/oder am Elastomerring und/oder im Bereich des Durchbruchrands angebracht ist.

9. Kugelgelenk nach einem der Ansprüche 1 bis 8, **dadurch gekennzeichnet, dass** der Gleitring (16) und/oder die Gleitschale (14) aus gleitfähigem Kunststoff oder aus Metall- oder Keramikmaterial mit einer fest haftenden Gleitschicht bestehen.

## Claims

1. Ball joint (1) having a ball pivot (2) as first bearing part which consists of a ball part (4) and a pivot part, and having a housing (3) as second bearing part, in which the ball pivot (2) is mounted in such a way that it protrudes with its pivot part at least partially out of an aperture (20) in the housing (3) and in the process can be rotated about the pivot axis (5) and can be pivoted in the region of the aperture (20), the ball part (4) of the ball pivot (2) consisting of an at least hemispherical ball section which is mounted in an associated concave spherical cap (11), lying opposite the aperture (20), of the housing (3) such that it can slide on a sliding layer (12) comprising a sliding shell (14) and an elastomer shell (13) which lie above one another, and the ball section (4) being adjoined by the pivot part which consists of a sliding collar (6) which is rotationally symmetrical about the pivot axis (5) with a connector pin (8) which is guided out of the aperture (20), the sliding collar (6) being mounted slidably, such that it is prestressed in the direction of the spherical cap (11), in the housing (3) via a combination of the sliding ring (16) and the elastomer ring (15) which lie above one another, with the result that a rotation, free from a restoring force, of the ball pivot (2) about the pivot axis (5) over the full angular range and a cardanic deflection are possible, **characterized in that** the sliding collar (6) is configured with a smaller diameter, possibly with a rounded transition, than the adjoining ball section diameter, and **in that** the sliding ring (16) bears against the circumference of the sliding collar (6) and laterally against the ball section (4), and points with an obliquely set, possibly also convexly curved circumferential face (17) onto a correspondingly set inner ring contour (18) of the housing, and the prestressed elastomer ring (15) is arranged in between with an approximately identical thickness, with the result that a cardanic deflection with an elastic resistance is possible.

2. Ball joint according to Claim 1, **characterized in that** the housing (3) consists of two housing parts (9, 10), the dividing plane preferably lying transversely with respect to the pivot axis (5) and in the region between the spherical cap (11) and the sliding collar (6), and **in that**, in the mounted state, the housing parts (9, 10) are connected tightly to one another under prestress, in particular by way of pressing and/or screwing and/or beading and/or caulking and/or adhesive bonding.

3. Ball joint according to Claim 1 or 2, **characterized in that** the aperture (20) is configured frustoconically on the housing (3) in accordance with the pivoting deflection of the connector pin (8), and **in that** the aperture edge is provided with an end stop (21) made from elastomer material for the connector pin (8).

4. Ball joint according to one of Claims 1 to 3, **characterized in that** a first layer as elastomer shell (13) and a second layer as sliding shell (14) of the sliding layer (12) are connected fixedly among one another and to the spherical cap (11), and the ball section (4) is mounted such that it can slide with a smooth outer face.

5. Ball joint according to one of Claims 1 to 4, **characterized in that** the inner contour (18) of the housing (3) is set conically and/or preferably in a concave spherical cap shape in the region of the sliding collar (6), and the combination of sliding ring (16) and elastomer ring (15) is arranged in a prestressed manner here.

6. Ball joint according to one of Claims 1 to 5, **characterized in that** the combination of the elastomer ring (15) and the sliding ring (16) which lies above it are connected fixedly among one another and to the housing inner wall (18), and the sliding collar (6) is mounted such that it can slide with a smooth surface, or **in that**, as an alternative, a combination of lower elastomer ring and sliding ring which lies above it is connected fixedly to the sliding collar, and the latter is mounted such that it can slide with the sliding ring on an associated smooth, rotationally symmetrical housing inner wall.

7. Ball joint according to one of Claims 1 to 6, **characterized in that** sliding face gaps of the ball pivot (2) which are open towards the aperture (20) are sealed by means of sealing lips (19) and/or sealing caps to be pulled over them.

8. Ball joint according to Claim 7, **characterized in that** at least one circumferential sealing lip (19) is attached on the sliding ring (16) and/or on the elastomer ring and/or in the region of the aperture edge.

9. Ball joint according to one of Claims 1 to 8, **characterized in that** the sliding ring (16) and/or the sliding shell (14) consist/consists of plastic with sliding properties or of metal or ceramic material with a tenacious sliding layer.

## Revendications

1. Articulation à bille (1) comprenant un tourillon sphérique (2) en tant que première partie de palier, qui se compose d'une partie de bille (4) et d'une partie de tourillon, et comprenant un boîtier (3) en tant que deuxième partie de palier, dans lequel le tourillon sphérique (2) est supporté de telle sorte qu'il sorte avec sa partie de tourillon au moins partiellement hors d'un orifice (20) dans le boîtier (3) et puisse en l'occurrence tourner autour de l'axe de tourillon (5) et pivoter dans la région de l'orifice (20), la partie de bille (4) du tourillon sphérique (2) se composant d'une portion de bille au moins hémisphérique qui est supportée dans une calotte sphérique (11) concave associée du boîtier (3), opposée à l'orifice (20), de manière à pouvoir glisser sur une couche de glissement (12) constituée d'une coque de glissement (14) et d'une coque en élastomère (13) superposées, et la partie de tourillon se raccordant à la portion de bille (4), laquelle partie de tourillon se compose d'un col de glissement (6) à symétrie de révolution autour de l'axe de tourillon (5) avec un tourillon de raccordement (8) guidé hors de l'orifice (20), le col de glissement (6) étant supporté de manière à pouvoir glisser dans la direction de la calotte sphérique (11) sous l'effet d'une précontrainte dans le boîtier (3) par le biais d'une combinaison de la bague de glissement (16) et de la bague élastomère (15) superposées, de telle sorte qu'une rotation sans force de rappel du tourillon sphérique (2) autour de l'axe de tourillon (5) soit possible sur toute la plage angulaire et par le biais d'une déviation de cardan, **caractérisée en ce que** le col de glissement (6) est réalisé sous forme cylindrique avec un plus petit diamètre par comparaison avec le diamètre suivant de la portion de bille, éventuellement avec une transition arrondie, et **en ce que** la bague de glissement (16) s'applique contre la périphérie du col de glissement (6) et latéralement contre la portion de bille (4), et par une surface périphérique inclinée obliquement (17), éventuellement encore de courbure convexe, est tournée vers un contour de bague intérieur (18) du boîtier, incliné de manière correspondante, et la bague élastomère précontrainte (15) d'épaisseur approximativement identique est disposée entre eux de telle sorte qu'une déviation de cardan avec une résistance élastique soit possible.

2. Articulation à bille selon la revendication 1, **caractérisée en ce que** le boîtier (3) se compose de deux parties de boîtier (9, 10), le plan de séparation s'étendant de préférence transversalement à l'axe de tourillon (5) et se situant dans la région entre la calotte sphérique (11) et le col de glissement (6), et **en ce que** les parties de boîtier (9, 10), dans l'état monté, sont connectées hermétiquement l'une à l'autre par précontrainte, notamment par pressage et/ou par vissage et/ou par bordage et/ou par matage et/ou par collage.

3. Articulation à bille selon la revendication 1 ou 2, **caractérisée en ce que** l'orifice (20) au niveau du boîtier (3) est réalisé sous forme tronconique de manière correspondant à la déviation de pivotement du tourillon de raccordement (8), et **en ce que** le bord de l'orifice est pourvu d'une butée de fin de course (21) en matériau élastomère pour le tourillon de raccordement (8).

4. Articulation à bille selon l'une quelconque des revendications 1 à 3, **caractérisée en ce qu'**une première couche en tant que coque élastomère (13) et une deuxième couche en tant que coque de glissement (14) de la couche de glissement (12) sont connectées l'une à l'autre et à la calotte sphérique (11), et la portion de bille (4) est supportée avec une surface extérieure lisse de manière à pouvoir glisser.

5. Articulation à bille selon l'une quelconque des revendications 1 à 4, **caractérisée en ce que** le contour intérieur (18) du boîtier (3) est incliné dans la région du col de glissement (6) sous forme conique et/ou de préférence sous forme de calotte sphérique concave et dans ce cas la combinaison de la bague de glissement (16) et de la bague élastomère (15) est disposée de manière précontrainte.

6. Articulation à bille selon l'une quelconque des revendications 1 à 5, **caractérisée en ce que** la combinaison de la bague élastomère (15) et de la bague de glissement (16) disposée par-dessus celle-ci sont connectées fixement l'une à l'autre et à la paroi intérieure du boîtier (18) et le col de glissement (6) est supporté avec une surface lisse de manière à pouvoir glisser, ou **en ce qu'**en variante une combinaison de la bague élastomère inférieure et de la bague de glissement disposée par-dessus celle-ci est connectée fixement au col de glissement et celui-ci est supporté avec la bague de glissement de manière à pouvoir glisser sur une paroi intérieure du boîtier lisse associée à symétrie de révolution.

7. Articulation à bille selon l'une quelconque des revendications 1 à 6, **caractérisée en ce que** des fentes de surface de glissement du tourillon sphérique (2) ouvertes vers l'orifice (20) sont étanchéifiées au moyen de lèvres d'étanchéité (19) et/ou de capuchons d'étanchéité de recouvrement.

8. Articulation à bille selon la revendication 7, **caractérisée en ce qu'**au moins une lèvre d'étanchéité périphérique (19) est montée sur la bague de glissement (16) et/ou sur la bague élastomère et/ou dans la région du bord de l'orifice.

9. Articulation à bille selon l'une quelconque des revendications 1 à 8, **caractérisée en ce que** la bague de glissement (16) et/ou la coque de glissement (14) se composent d'un plastique glissant ou d'un matériau à base de métal ou de céramique avec une couche de glissement adhérant fixement.
